# EUROPEAN PATENT APPLICATION

(11) **EP 4 434 782 A1**
(43) Date of publication of application: **25.09.2024**
(21) Application number: 22914930.7
(22) Date of filing: 28.12.2022
(51) Int. Cl.: B60J 1/00, B60Q 3/208

(54) **AUTOMOBILE WINDOW AND AUTOMOBILE**

(30) Priority: 28.12.2021 CN 202111629854
(71) Applicant: Fuyao Glass Industry Group Co., Ltd., Fuqing, Fujian 350300 (CN)
(72) Inventor: LIU, Xianping, Fuqing, Fujian 350300 (CN); LIN, Conglong, Fuqing, Fujian 350300 (CN); YU, Jianzhao, Fuqing, Fujian 350300 (CN); WANG, Huaiyuan, Fuqing, Fujian 350300 (CN); YE, Jiarong, Fuqing, Fujian 350300 (CN); WANG, Zhixin, Fuqing, Fujian 350300 (CN); ZHAN, Maorong, Fuqing, Fujian 350300 (CN)
(74) Representative: Mewburn Ellis LLP
(86) International application number: PCT/CN2022/142887
(87) International publication number: WO 2023/125678

(57) **Abstract**

An automobile window (100) and an automobile are provided. The automobile window (100) includes an outer glass sheet (10), an inner glass sheet (20), an intermediate adhesive layer (30), and a stiffener (50). The outer glass sheet (10) has a first surface (11) and a second surface (12). The inner glass sheet (20) has a third surface (21) and a fourth surface (22). The first surface (11) faces outside the automobile. The fourth surface (22) faces inside the automobile. The second surface (12) has a first mounting region (121) and a first attaching region (122). One surface of the intermediate adhesive layer (30) has a second mounting region (321) and a second attaching region (34). The outer glass sheet (10), the intermediate adhesive layer (30), and the inner glass sheet (20) are stacked in sequence. The second surface (12) is adhered to the third surface (21) through the intermediate adhesive layer (30). A projection of the second mounting region (321) overlaps the first mounting region (121). A projection of the second attaching region (34) overlaps the first attaching region (122). A projection of the inner glass sheet (20) overlaps the first mounting region (121). The stiffener (50) is disposed at a side portion of the inner glass sheet (20). The stiffener (50) has one end connected to the second attaching region (34). The stiffener (50) has the other end connected to the fourth surface (22) of the inner glass sheet.

## Description

### CROSS-REFERENCE TO RELATED APPLICATION(S)

This application claims priority to Chinese Patent Application No. 202111629854.2, filed December 28, 2021, and entitled "AUTOMOBILE WINDOW AND AUTOMOBILE", the entire disclosure of which is hereby incorporated by reference.

### TECHNICAL FIELD

This disclosure relates to the field of automobile technology, and in particular to an automobile window and an automobile.

### BACKGROUND

Automobile windows are mounted on automobile housings, so that air in automobiles can be effectively circulated, and more fresh air can enter the automobile. In addition, the automobile window results in a wide field of view and meets shooting requirements of mobile photography and videography. At present, since an automobile window with an ambient lamp has a function of illumination and color ambient lighting effect, the automobile window with the ambient lamp is widely welcomed by people. However, most automobile windows with ambient lamps adopt two-piece structures, which are not rigid enough and easy to break.

### SUMMARY

The present disclosure aims to provide an automobile window and an automobile, to solve a problem of insufficient rigidity of an automobile window with a two-piece structure.

An automobile window is provided in the present disclosure. The automobile window includes an outer glass sheet, an inner glass sheet, an intermediate adhesive layer, and a stiffener. The outer glass sheet has a first surface and a second surface. The inner glass sheet has a third surface and a fourth surface. The first surface faces outside the automobile. The fourth surface faces inside the automobile. The second surface has a first mounting region and a first attaching region located at a side of the first mounting region. One surface of the intermediate adhesive layer has a second mounting region and a second attaching region located at a side of the second mounting region. The outer glass sheet, the intermediate adhesive layer, and the inner glass sheet are stacked in sequence. The second surface is adhered to the third surface through the intermediate adhesive layer. An orthographic projection of the second mounting region on the outer glass sheet completely overlaps the first mounting region. An orthographic projection of the second attaching region on the outer glass sheet overlaps the first attaching region. A projection of the inner glass sheet on the first mounting region of the outer glass sheet completely overlaps the first mounting region. The stiffener is disposed at a side portion of the inner glass sheet. The stiffener has one end connected to the second attaching region. The stiffener has the other end connected to an edge of the fourth surface of the inner glass sheet.

The stiffener has a first section, a second section, and a third section. The second section has two opposite ends that are respectively connected to the first section and the third section. The first section and the third section are arranged in parallel and each extend away from the second section. The fourth surface has a carrying region at two side edges of the fourth surface. The first section is stacked with and attached to the carrying region, and the third section is stacked with and attached to the second attaching region. The automobile window further includes a light-emitting body. The light-emitting body is located between the second section and the side portion of the inner glass sheet. The light-emitting body is connected to the second attaching region.

The light-emitting body is thicker than the inner glass sheet. The first section has a first sub-section, a second sub-section, and a third sub-section. The first sub-section and the second sub-section are connected at an angle. The second sub-section and the third sub-section are connected at an angle. The first sub-section is substantially parallel to the third sub-section and the third section. The second sub-section is substantially parallel to the second section. The first sub-section, the second sub-section, the third sub-section, and the second section cooperatively form a recess. The recess, the outer glass sheet, the inner glass sheet cooperatively define an accommodating space. The light-emitting body is accommodated in the accommodating space.

The first section defines a heat dissipation hole penetrating through the first section. The heat dissipation hole corresponds to the light-emitting body in position.

The first section is provided with a swapping switch. The swapping switch includes a door plate and an opening. The door plate is openable and closeable relative to the opening. The swapping switch corresponds to the light-emitting body in position.

The heat dissipation hole is defined in the door plate of the swapping switch.

The automobile window further includes a first connecting body between the outer glass sheet and the stiffener. The outer glass sheet is adhered and fixed to the stiffener through the first connecting body.

The outer glass sheet defines a first adhesive groove in the first attaching region of the outer glass sheet. The intermediate adhesive layer defines a second adhesive groove in the second attaching region. The first adhesive groove and the second adhesive groove are in communication with each other and form a third adhesive groove. The third adhesive groove is filled with the first connecting body. Part of the first connecting body extends to the second attaching region to connect the stiffener.

The first connecting body is a cured colloid.

The stiffener is made of a metal material or a plastic material.

A receiving region is defined at one side of the second section away from the inner glass sheet and one side of the third section away from the outer glass sheet. The receiving region is connected to an automobile housing.

An automobile is further provided in the present disclosure. The automobile includes an automobile housing and the automobile window described above. The automobile housing defines a window. The automobile window is mounted on the window. The stiffener is fixed and connected to the automobile housing.

Two opposite sides of the window are carrying edges. Each of carrying edges has a mounting region. The stiffener defines a receiving region at one side of the stiffener away from the inner glass sheet and away from the outer glass sheet. The carrying region and the receiving region are opposite to each other and cooperatively define a dispensing space. A second connecting body is disposed in the dispensing space. The automobile window is fixed to the automobile housing through the second connecting body.

In summary, in the present disclosure, the stiffener is disposed to connect the outer glass sheet and the inner glass sheet, and the automobile window is mounted on the automobile housing through the stiffener, so that the problem of insufficient rigidity of the automobile window with the two-piece structure can be solved.

### BRIEF DESCRIPTION OF THE DRAWINGS

To describe the technical solutions in embodiments of the present disclosure or the related art more clearly, the accompanying drawings for use in embodiments are briefly described below. Apparently, the accompanying drawings in the following description show merely some embodiments of the present disclosure, and those of ordinary skill in the art may obtain other accompanying drawings from these accompanying drawings without creative effort.
FIG. 1 is a schematic structural plan view of an automobile window according to an embodiment of the present disclosure.
FIG. 2 is a schematic cross-sectional view of assembly of the automobile window illustrated in FIG. 1 and an automobile housing.
FIG. 3 is an exploded schematic cross-sectional view of assembly of the automobile window illustrated in FIG. 1 and an automobile housing.
FIG. 4 is a schematic plan view of a light-emitting body of an automobile window according to an embodiment of the present disclosure.
FIG. 5 is a schematic plan view of a light-emitting body of an automobile window according to another embodiment of the present disclosure.
FIG. 6 is a schematic plan view of a light-emitting body of an automobile window according to yet another embodiment of the present disclosure.
FIG. 7 is a schematic cross-sectional view of an automobile window according to another embodiment of the present disclosure.
FIG. 8 is a schematic cross-sectional view of an automobile window according to yet another embodiment of the present disclosure.
FIG. 9 is a schematic cross-sectional view of an automobile window according to yet another embodiment of the present disclosure.
FIG. 10 is a schematic cross-sectional view of an automobile window according to yet another embodiment of the present disclosure.

### DETAILED DESCRIPTION

Technical solutions of embodiments of the present disclosure will be described clearly and completely below with reference to accompanying drawings in embodiments of the present disclosure. Apparently, embodiments described herein are merely some embodiments, rather than all embodiments, of the present disclosure. Based on embodiments of the present disclosure, all other embodiments obtained by those of ordinary skill in the art without creative effort shall fall within the protection scope of the present disclosure.

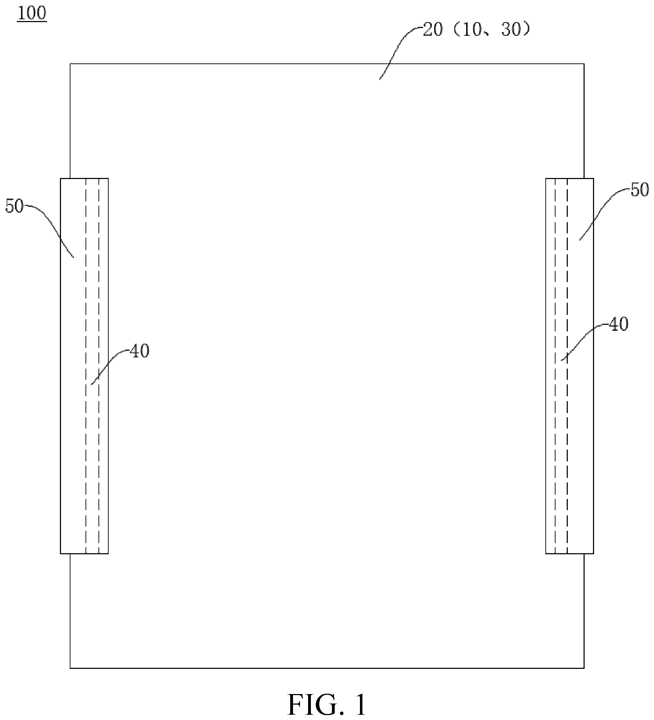

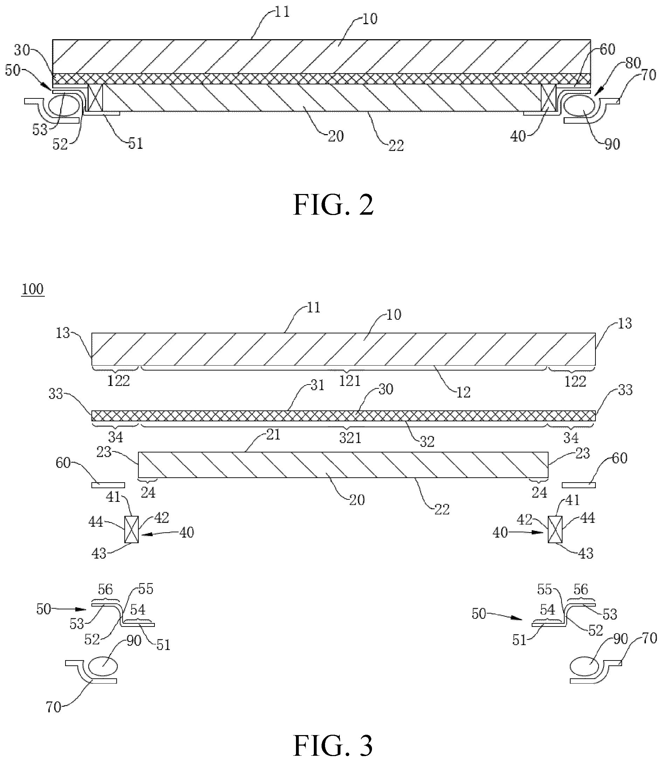

Referring to FIG. 1 and FIG. 2, where FIG. 2 is a schematic cross-sectional view of an automobile window 100 mounted on an automobile housing 70 according to an embodiment. Only part of the automobile housing is illustrated. The automobile in this embodiment includes the automobile housing 70. The automobile window 100 includes an outer glass sheet 10, an inner glass sheet 20, an intermediate adhesive layer 30, a light-emitting body 40, and a stiffener 50. The outer glass sheet 10, the inner glass sheet 20, and the intermediate adhesive layer 30 are stacked in sequence. The outer glass sheet 10 is fixed to the inner glass sheet 20 through the intermediate adhesive layer 30. The light-emitting body 40 is disposed at two opposite sides of the inner glass sheet 20. The stiffener 50 is adhered to the periphery of the outer glass sheet 10 through a first connecting body 60. The light-emitting body 40 and part of the inner glass sheet 20 are carried on the stiffener 50. In addition, a dispensing space 80 is defined between the stiffener 50 and the automobile housing 70. The dispensing space 80 is filled with a second connecting body 90. The automobile window 100 is fixed to the automobile housing 70 through the second connecting body 90, so that the automobile window 100 is mounted on the automobile. In an embodiment, the first connecting body 60 and the second connecting body 90 are, but not limited to, cured colloids.

Specifically, an area of the outer glass sheet 10 is larger than an area of the inner glass sheet 20. In other words, a projection of the inner glass sheet 20 on the outer glass sheet 10 is completely located in the outer glass sheet 10. It may also be understood that a projection of the outer glass sheet 10 on the inner glass sheet 20 completely covers the inner glass sheet 10. The intermediate adhesive layer 30 is located between the outer glass sheet 10 and the inner glass sheet 20. The intermediate adhesive layer 30 is used to adhering the outer glass sheet 10 to the inner glass sheet 20. The light-emitting body 40 is disposed around the periphery of the inner glass sheet 20. The side portion of the inner glass sheet 20, the stiffener 50, and part of the intermediate adhesive layer 30 surround the light-emitting body 40. The light-emitting body 40 can emit light. The light emitted by the light-emitting body 40 is diffused to the inside of the automobile window 100 through the inner glass sheet 20, to illuminate the inside of the automobile. Meanwhile, the visual effect of the automobile window 100 is improved. Two stiffeners 50 are respectively disposed at two opposite sides of the inner glass sheet 20. For each stiffener 50, the stiffener 50 is adhered to the outer glass sheet 10 through the first connecting body 60, and the inner glass sheet 20 is carried on the stiffener 50, thereby improving the rigidity of the automobile window 100.

Referring to FIG. 2 and FIG. 3, in this embodiment, the outer glass sheet 10 substantially has a rectangular plate-like structure. The cross section of the outer glass sheet 10 is, but not limited to, rectangular. The outer glass sheet 10 has a first surface 11, a second surface 12, and two first side-surfaces 13. The first surface 11 and the second surface 12 are two surfaces of the outer glass sheet 10 having the largest area. The first surface 11 and the second surface 12 are opposite to each other. The two first side-surfaces 13 are respectively connected to the first surface 11 and the second surface 12. Specifically, when the automobile window 100 is mounted on the automobile, the first surface 11 faces outside the automobile and is in direct contact with the space outside the automobile, the second surface 12 faces inside the automobile, and the two first side-surfaces 13 are two opposite surfaces in the width direction of the outer glass sheet 10.

The second surface 12 has a first mounting region 121 and two first attaching regions 122 located at two opposite sides of the first mounting region 121. The two first attaching regions 122 are respectively located at positions where the second surface 12 is connected to the two first side-surfaces 13. A projection of the inner glass sheet 20 on the second surface 12 completely overlaps the first mounting region 121, or is at least located in the first mounting region 121. In this embodiment, on the second surface 12, remaining regions of the second surface 12 except for the projection region of the inner glass sheet 20 on the second surface 12 are the two first attaching regions 122. It can be understood that in the width direction of the outer glass sheet 10 (i.e., the width direction of the automobile), the second surface 12 has one first attaching region 122 at each of two sides thereof.

Referring to FIG. 2 and FIG. 3 again, the inner glass sheet 20 substantially has a rectangular plate-like structure. The cross section of the inner glass sheet 20 is, but not limited to, rectangular. The inner glass sheet 20 has a third surface 21, a fourth surface 22, and two second side-surfaces 23 opposite to each other. The third surface 21 and the fourth surface 22 are two surfaces of the inner glass sheet 20 having the largest area. The third surface 21 and the fourth surface 22 are opposite to each other. The two second side-surfaces 23 are connected to the third surface 21 at two opposite sides of the third surface 21. The two second side-surfaces 23 are connected to the fourth surface 22 at two opposite sides of the fourth surface 22. Specifically, when the automobile window 100 is mounted on the automobile, the third surface 21 faces outside the automobile, and the fourth surface 22 faces inside the automobile and is in direct contact with the space inside the automobile. The two second side-surfaces 23 are two opposite surfaces in the width direction of the inner glass sheet 20 (i.e., the width direction of the automobile). The light-emitting body 40 is mounted on the two second side-surfaces 23. The light emitted by the light-emitting body 40 enters the inner glass sheet 20 to illuminate the inside of the automobile. Meanwhile, the visual effect of the automobile window 100 is improved.

In an embodiment, a pattern is carved on the inner glass sheet 20. When the light emitted by the light-emitting body 40 passes through the inner glass sheet 20, the pattern on the inner glass sheet 20 is presented by the light, thereby improving the visual effect of the automobile window 100.

The fourth surface 22 includes two carrying regions 24 located at two opposite sides of the fourth surface 22. The two carrying regions 24 are respectively located on the fourth surface 22 close to the two second side-surfaces 23. Projections of the two first attaching regions 122 on the fourth surface 22 are completely staggered from the two carrying regions 24. Specifically, in the width direction of the inner glass sheet 20 (i.e., the width direction of the automobile), the fourth surface 22 has one carrying region 24 at each of two sides of the fourth surface 22. The two carrying regions 24 are respectively connected to the stiffeners 50 by the following manners. The carrying region 24 may be directly carried on the stiffener 50 and thus the inner glass sheet 20 may be carried on the stiffener 50, or the carrying region 24 may be adhered to the stiffener 50, which is not limited in the present disclosure.

Referring to FIG. 2 and FIG. 3 again, the intermediate adhesive layer 30 substantially has a rectangular plate-like structure. The cross section of the intermediate adhesive layer 30 is, but not limited to, rectangular. The outer glass sheet 10 is adhered to the inner glass sheet 20 through the intermediate adhesive layer 30. The intermediate adhesive layer 30 is made of, but not limited to, polyvinyl butyral (PVB) or ethylene vinyl acetate copolymer (EVA). The intermediate adhesive layer 30 has a fifth surface 31, a sixth surface 32, and two third side-surfaces 33. The fifth surface 31 and the sixth surface 32 are two surfaces of the intermediate adhesive layer 30 having the largest area. Specifically, when the automobile window 100 is mounted on the automobile, the fifth surface 31 faces outside the automobile and is adhered to the outer glass sheet 10, and the sixth surface 32 faces inside the automobile and is adhered to the inner glass sheet 20. The two third side-surfaces 33 are two opposite surfaces in the width direction of the intermediate adhesive layer 30 (i.e., the width of the automobile).

The sixth surface 32 has a second mounting region 321 and two second attaching regions 34 located at two opposite sides of the second mounting region 321. An orthographic projection of the second mounting region 321 on the outer glass sheet 10 completely overlaps the first mounting region 121. The second attaching region 34 is adhered to the light-emitting body 40 and the stiffener 50. The two second attaching regions 34 are respectively located on the sixth surface 32 close to the two third side-surfaces 33. Specifically, in the width direction of the intermediate adhesive layer 30, the sixth surface 32 has one second attaching region 34 at each of two sides of the sixth surface 32. Projections of the two first attaching regions 122 of the outer glass sheet 10 on the sixth surface 32 overlap two second attaching regions 34. Projections of the two carrying regions 24 of the inner glass sheet 20 on the sixth surface 32 are completely staggered from the two second attaching regions 34. It may be noted that on the sixth surface 32, a remaining region of the sixth surface 32 except for the two second attaching regions 34 is adhered to the inner glass sheet 20.

The outer glass sheet 10 is adhered to the inner glass sheet 20 through the intermediate adhesive layer 30. The second surface 12 of the outer glass sheet 10 is opposite to the third surface 21 of the inner glass sheet 20. The intermediate adhesive layer 30 is arranged between the outer glass sheet 10 and the inner glass sheet 20. Specifically, the fifth surface 31 of the intermediate adhesive layer 30 is adhered to the second surface 12 of the outer glass sheet 10. The sixth surface 32 of the intermediate adhesive layer 30 is adhered to the third surface 21 of the inner glass sheet 20. Meanwhile, it is ensured that the first side-surface 13 at each of the two sides of the outer glass sheet 10 corresponds to the third side-surface 33 at each of the two sides of the intermediate adhesive layer 30. In other words, at the same side, each first side-surface 13 and each third side-surface 33 are arranged on one plane.

A projection of each first attaching region 122 of the outer glass sheet 10 on the sixth surface 32 completely overlaps the second attaching region 34 of the intermediate adhesive layer 30. The projections of the two carrying regions 24 of the inner glass sheet 20 on the sixth surface 32 are staggered from the two second attaching regions 34. It may be noted that the fifth surface 31 of the intermediate adhesive layer 30 is fully adhered to the second surface 12 of the outer glass sheet 10. In other words, the fifth surface 31 completely overlaps the second surface 12 after the fifth surface 31 is adhered to the second surface 12. On the sixth surface 32 of the intermediate adhesive layer 30, a remaining region of the sixth surface 32 except for the two second attaching regions 34 is fully adhered to the third surface 21 of the inner glass sheet 20.

Each light-emitting body 40 is, but not limited to, a light-emitting diode (LED), which is used for emitting light into the inner glass sheet 20. The light emitted by the inner glass sheet 20 is diffused to the inside of the automobile window glass 100 to illuminate the interior of the automobile, and the visual effect of the automobile window 100 is improved. The light-emitting body 40 has a first fixing surface 41, a light-emitting surface 42, a second fixing surface 43, and a backlight surface 44. The first fixing surface 41 and the second fixing surface 43 are opposite to each other. The light-emitting surface 42 and the backlight surface 44 are opposite to each other. The first fixing surface 41 is fixed and connected to the second attaching region 34 of the intermediate adhesive layer 30, and located at the position of the second attaching region 34 close to the second side-surface 23. The light-emitting surface 42 is attached to the second side-surface 23. An area of the light-emitting surface 42 is equal to an area of the second side-surface 23. In other words, a projection of the light-emitting surface 42 on the second side-surface 23 completely overlaps the second side-surface 23. When the light-emitting body 40 is mounted on the automobile window 100, the light-emitting surface 42 is fixed and connected to the second side-surface 23, so that the position of the light-emitting body 40 in the automobile window 100 is fixed. When the light-emitting body 40 is mounted on the inner glass sheet 20, the second fixing surface 43 and the fourth surface 22 are on the same plane, and the second fixing surface 43 is fixed and connected to the stiffener 50.

In an embodiment, among the first fixing surface 41, the light-emitting surface 42, the second fixing surface 43, and the backlight surface 44 of each light-emitting body 40, at least the first fixing surface 41 is fixed and connected to the second attaching region 34 of the intermediate adhesive layer 30, while the light-emitting surface 42 is not fixed to the second side surface 23, and the second fixing surface 43 and the backlight surface 44 are not fixed to the stiffener 50. In other words, the position of the light-emitting body 40 in the automobile window 100 can be fixed by merely fixing the first fixing surface 41 to the second attaching region 34 of the intermediate adhesive layer 30, thereby simplifying the process flow and improving the assembly efficiency.

In an embodiment, the inner glass sheet 20 defines fixing grooves (not shown) at two sides of the inner glass sheet 20. The light-emitting body 40 can be directly fixed to the inner glass sheet 20 through the fixing groove. It may be noted that the present disclosure does not limit the manner in which the light-emitting body 40 is fixed to the inner glass sheet 20, and any manner in which the light-emitting body 40 can be fixed to the inner glass sheet 20 is acceptable.

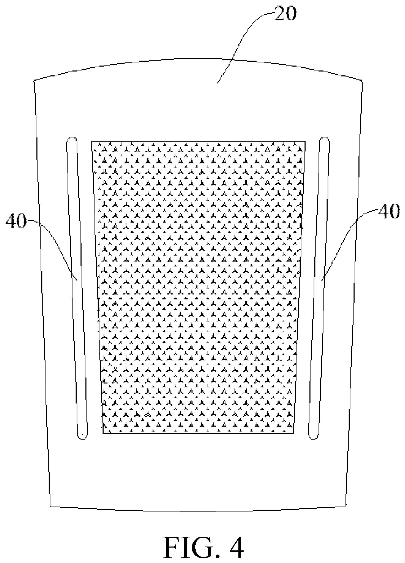

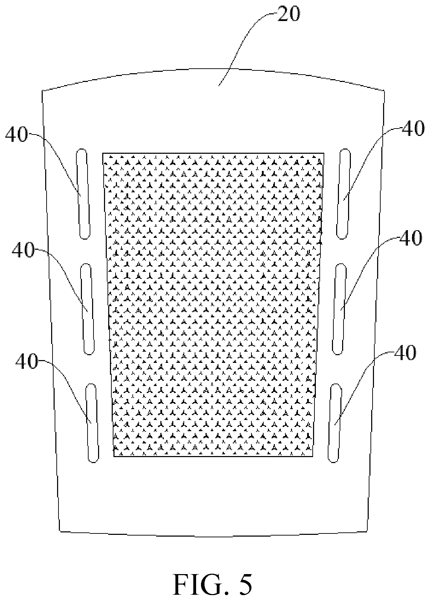

Referring to FIG. 4 to FIG. 6, in some embodiments, the number of the light-emitting body 40 is single or multiple, and the shape of the light-emitting body 40 is strip-shaped or round. The present disclosure neither limits the number and shape of the light-emitting body 40, nor limits the position of the light-emitting bodies 40 mounted on the automobile window glass 100, as long as the light emitted by the light-emitting bodies 40 can be emitted into the automobile window glass 100 and achieve the illumination and aesthetic functions of the automobile window glass 100.

Referring to FIG. 2 and FIG. 3 again, each stiffener 50 is made of a metal material or a plastic material. The stiffener has a first section 51, a second section 52, and a third section 53. A cross section (i.e., a cross section in the width direction of the automobile) of each stiffener 50 substantially has a Z-shaped plate structure. The first section 51 and the second section 52 are connected at an angle. The second section 52 and the third section 53 are connected at an angle. The first section 51 and the third section 53 are substantially parallel to each other and extend away from the second section 52. A receiving region (not shown) is defined at one side of the second section 52 away from the inner glass sheet 20 and one side of the third section 53 away from the outer glass sheet 10. The receiving region is connected to the automobile housing. The first section 51 has a third attaching region 54. The second section 52 has a seventh surface 55. The third section 53 has a fourth attaching region 56. The seventh surface 55 is connected between the third attaching region 54 and the fourth attaching region 56.

The stiffener 50 is adhered and fixed to the outer glass sheet 10 through the first connecting body 60. Part of the inner glass sheet 20 is carried on the stiffener 50. The seventh surface 55 corresponds to the backlight surface 44 of the light-emitting body 40. Specifically, the seventh surface 55 is parallel to and is not in direct contact with the backlight surface 44. In other words, there is a gap between the seventh surface 55 and the backlight surface 44. In an embodiment, the seventh surface 55 is in direct contact with backlight surface 44. In other words, there is no gap between seventh surface 55 and backlight surface 44. It may be understood that the second attaching region 34 of the intermediate adhesive layer 30, the second side-surface 23 of the inner glass sheet, the first section 51 of the stiffener 50, and the second section 52 of the stiffener 50 cooperatively surround the light-emitting body 40.

The third attaching region 54 is in contact with the carrying region 24 and carry an edge of the inner glass sheet 20, or the third attaching region 54 may be adhered to the inner glass sheet 20 through a colloid to adhere and fix the stiffener 50 to the inner glass sheet 20. It may be noted that an area of a projection of the third attaching region 54 on the carrying region 24 is not smaller than the sum of an area of the carrying region 24 and an area of the second attaching surface 43, so that there is sufficient space for disposing the light-emitting body 40. In other words, the light-emitting body 40 is disposed on the third attaching region 54 of the stiffener 50 except for the region where the third attaching region 54 is adhered to the carrying region 24. The third section 53 of the stiffener 50 is fixed and connected to the outer glass sheet 10, and the inner glass sheet 20 is carried on the first section 51. When the automobile window glass 100 is mounted on the automobile housing, the rigidity of the inner glass sheet 20 can be improved, the inner glass sheet 20 is prevented from being damaged due to insufficient rigidity and no carrying structure, and thus the service life of the automobile window 100 is prolonged.

The fourth attaching region 56 is adhered to the second attaching region 34 through the first connecting body 60. The first connecting body 60 is a cured colloid. In other words, the fourth attaching region 56 is not in direct contact with the second attaching region 34, and the first connecting body 60 is filled between the fourth attaching region 56 and the second attaching region 34, so that the stiffener 50 is adhered and fixed to the outer glass sheet 10. It may be noted that an area of the second attaching region 34 is not smaller than the sum of an area of the fourth attaching region 56 and an area of the first fixing surface 41. In other words, a projection of the second attaching region 34 on the fourth attaching region 56 covers the fourth attaching region 56 and a projection of the first fixing surface 41 on the fourth attaching region 56.

For the automobile window and the automobile provided in the present disclosure, on the basis that an outer glass sheet 10 and an inner glass sheet 20 are connected through the intermediate adhesive layer, the stiffener 50 is disposed. The inner glass sheet 20 is carried on the first section 51 of the stiffener 50, and the fourth attaching region 56 of the third section 53 of the stiffener 50 is adhered to the outer glass sheet 10 through the connecting body. Further, in the space between the receiving region of the stiffener 50 and the mounting region of the automobile housing, that is, in the dispensing space, the dispensing operation is carried out to fix the automobile window 10 to the automobile housing. Therefore, the overall rigidity of the automobile window 100 is improved, and the problem of insufficient rigidity of an automobile window with a two-piece structure can be solved.

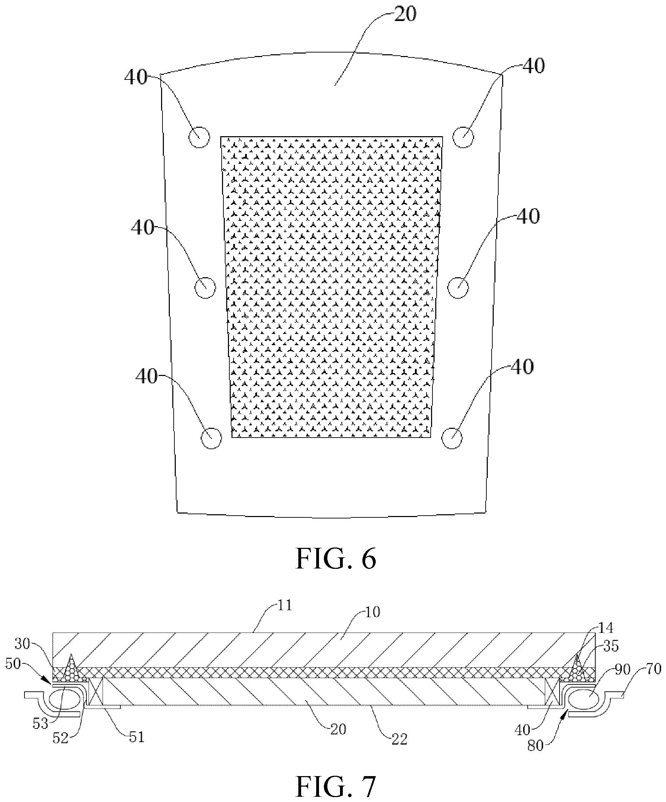

Referring to FIG. 7, in an embodiment, each first attaching region 122 defines one first adhesive groove 14. A cross section of each first adhesive groove 14 in the width direction of the second surface 12 (i.e., the width direction of the automobile) is triangular. When the stiffener 50 is adhered and fixed to the outer glass sheet 10, the first adhesive groove 14 is filled with the first connecting body 60, thereby improving an adhesive effect and increasing adhesive strength. In an embodiment, the cross section of each first adhesive groove 14 may also be in other shapes. The present disclosure does not limit the position and shape of the first adhesive groove 14, as long as the fixing relationship between the stiffener 50 and the outer glass sheet 10 can be met.

Each second attaching region 34 defines one second adhesive groove 35. Each second adhesive groove 35 penetrates through the fifth surface 31 and the sixth surface 32 of the intermediate adhesive layer 30. A cross section of each second adhesive groove 35 in the width direction of the intermediate adhesive layer 30 (i.e., the width direction of the automobile) is, but not limited to, trapezoidal. It may be noted that each second adhesive groove 35 corresponds to each first adhesive groove 14 in position. When the stiffener 50 is adhered and fixed to the outer glass sheet 10, the second adhesive is filled with the first connecting body 60, thereby improving the adhesive effect and increasing the adhesive strength.

In addition, each second adhesive groove 35 corresponds to each first adhesive groove 14 in position, and the intermediate adhesive layer 30 is adhered to the outer glass sheet 10, so that the second adhesive groove 35 and the first adhesive groove 14 are in communication with each other and form a third adhesive groove (not shown). Specifically, the cross section of each first adhesive groove 14 is triangular, and the cross section of each second adhesive groove 35 is trapezoidal. A bottom edge of the triangular cross section of each first adhesive groove 14 overlaps an upper base of the trapezoidal cross section of each second adhesive groove 35, so that the first adhesive groove 14 and the second adhesive groove 35 are in communication with each other and form the third adhesive groove (not shown). A cross section (a cross section in the width direction of the automobile) of the third adhesive groove (not shown) is triangular. The third adhesive groove (not shown) is filled with the first connecting body 60. The stiffener 50 is adhered and fixed to the outer glass sheet 10 through the first connecting body 60. Therefore, the adhesive effect is improved, and the adhesive strength is increased.

In an embodiment, the third adhesive groove (not shown) is formed by, but not limited to, the following manner. Firstly, the intermediate adhesive layer 30 is adhered to the outer glass sheet 10 first, and then the third adhesive groove (not shown) is defined by directly grooving at a position of each second attaching region 34.

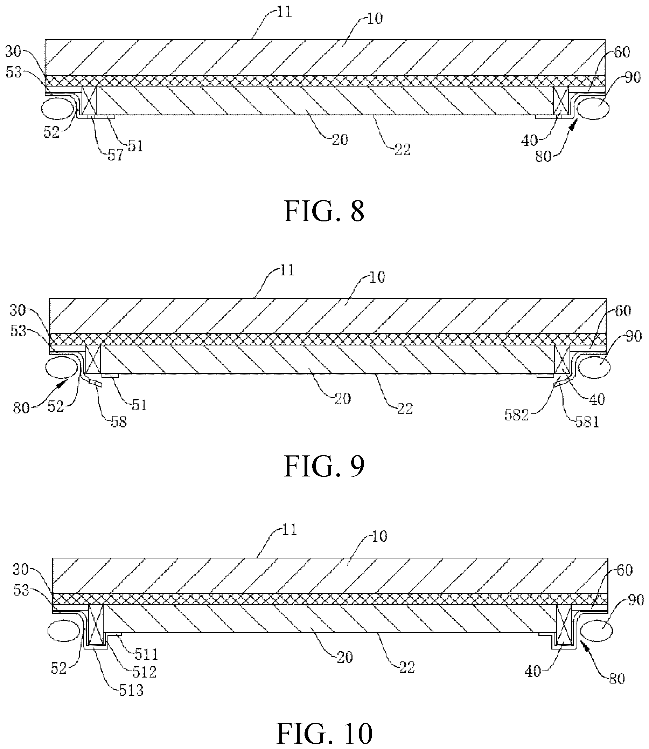

Referring to FIG. 8, in an embodiment, the first section 51 of each stiffener 50 further defines a heat dissipation hole 57. The heat dissipation hole 57 penetrates through the third attaching region 54 of the first section 51 and a surface of the first section 51 opposite to the third attaching region 54. The heat dissipation hole 57 corresponds to the second fixing surface 43 of the light-emitting body 40 in position. The heat dissipation hole 57 is used for discharging the heat generated during operation of the light-emitting body 40 in time, thereby reducing the failure rate and improving the safety. The present disclosure does not limit the number and shape of the heat dissipation hole 57, as long as the heat dissipation function of the light-emitting body 40 can be achieved.

Referring to FIG. 9, in an embodiment, the first section 51 of each stiffener 50 is further provided with a swapping switch 58. The swapping switch 58 corresponds to the second fixing surface 43 of the light-emitting body 40 in position. The swapping switch 58 includes a door plate 581 and an opening 582. The door plate 581 is openable and closeable relative to the opening 582, so that the light-emitting body 40 can be mounted or disassembled through the opening 582. When the light-emitting body 40 fails, the failed light-emitting body 40 can be disassembled and replaced through the swapping switch 58. In another embodiment, the heat dissipation hole 57 may also be defined in the swapping switch 58.

Referring to FIG. 10, in an embodiment, the light-emitting body 40 is thicker than the inner glass sheet 20. In other words, when viewed from the cross section in the width direction of the automobile, the light-emitting surface 42 is longer than the second side-surface 23, and the exceeding portion of the light-emitting surface 42 extends towards the inside of the automobile. In this case, the first section 51 of the stiffener 50 is substantially Z-shaped. The first section 51 has a first sub-section 511, a second sub-section 512, and a third sub-section 513. The first sub-section 511 and the second sub-section 512 are connected at an angle. The second sub-section 512 and the third sub-section 513 are connected at an angle. The first sub-section 511 is substantially parallel to the third sub-section 513 and the third sub-section 53. The second sub-section 512 is substantially parallel to the second section 52. The first sub-section 511, the second sub-section 512, the third sub-section 513, and the second sub-section 52 form a recess. The recess, the outer glass sheet 10, and the inner glass sheet 20 cooperatively define an accommodating space. The light-emitting body 40 is accommodated in the accommodating space.

Specifically, the first sub-section 511 extends along the carrying region 24 of the inner glass sheet 20 and is connected to the carrying region 24 of the inner glass sheet 20. One end of the second sub-section 512 is connected to the first sub-section 511 at an angle, and the other end of the second sub-section 512 extends along the second fixing surface 43 of the light-emitting body 40. One end of the third sub-section 513 is connected to the second sub-section 512 at an angle, and the other end of the third sub-section 513 extends along the second fixing surface 43 of the light-emitting body 40 and is connected to the second section 52. The second section 52 extends along the backlight surface 44 of the light-emitting body 40 and is connected to the third section at an angle. It can be understood that the second side-surface 23 of the inner glass sheet 20, the second sub-section 512 of the stiffener 50, the third sub-section 513, the second section 52, and part of the intermediate adhesive layer cooperatively surround the light-emitting body 40. Therefore, the light-emitting body is accommodated in the accommodating space, thereby adapting to the appearance of the light-emitting body 40, and mounting light-emitting bodies 40 with different sizes.

In an embodiment, the number of the stiffeners 50 may also be four or six. The present disclosure does not limit the number of the stiffeners 50. In the same case, when the number of the stiffeners 50 is greater, the reinforcing effect is better.

An automobile is further provided in the present disclosure. The automobile includes the automobile window 100 described above. The automobile further includes an automobile housing 70. The automobile housing 70 defines a window. Two opposite sides of the window of the automobile housing 70 are carrying edges. Each of the carrying edges has a mounting region. The automobile window 100 is mounted on the window. The stiffener 50 is fixed to the automobile housing 70. Specifically, the connection manner between the receiving region of each stiffener 50 and the automobile housing 70 is, but not limited to, the following. A dispensing space 80 is defined between the receiving region and the mounting region. In the dispensing space, a dispensing operation or a thermoplastic polyurethane (PU) injection molding operation is carried out, to place the second connecting body 90 in the dispensing space 80. Finally, the automobile window 100 is fixed to the automobile housing 70 through the second connecting body 90.

The above disclosures are merely exemplary embodiments of the present disclosure, and certainly are not intended to limit the scope of the claims of the present disclosure. Those of ordinary skill in the art can understand all or a part of the processes of the above embodiments, and equivalent variations made of claims of the present disclosure still belong to the scope of the present disclosure.

## Claims

1. An automobile window mounted on an automobile housing, comprising an outer glass sheet, an inner glass sheet, an intermediate adhesive layer, and a stiffener, wherein
the outer glass sheet has a first surface and a second surface, the inner glass sheet has a third surface and a fourth surface, the first surface faces outside the automobile, and the fourth surface faces inside the automobile;
the second surface has a first mounting region and a first attaching region located at a side of the first mounting region, one surface of the intermediate adhesive layer has a second mounting region and a second attaching region located at a side of the second mounting region;
the outer glass sheet, the intermediate adhesive layer, and the inner glass sheet are stacked in sequence, the second surface is adhered to the third surface through the intermediate adhesive layer, an orthographic projection of the second mounting region on the outer glass sheet completely overlaps the first mounting region, an orthographic projection of the second attaching region on the outer glass sheet overlaps the first attaching region, and a projection of the inner glass sheet on the first mounting region of the outer glass sheet completely overlaps the first mounting region; and
the stiffener is disposed at a side portion of the inner glass sheet, the stiffener has one end connected to the second attaching region, and the stiffener has the other end connected to an edge of the fourth surface of the inner glass sheet.

2. The automobile window of claim 1, wherein the stiffener has a first section, a second section, and a third section, the second section has two opposite ends that are respectively connected to the first section and the third section, and the first section and the third section are arranged in parallel and each extend away from the second section; the fourth surface has a carrying region at two side edges of the fourth surface, the first section is stacked with and attached to the carrying region, and the third section is stacked with and attached to the second attaching region; and the automobile window further comprises a light-emitting body, the light-emitting body is located between the second section and the side portion of the inner glass sheet, and the light-emitting body is connected to the second attaching region.

3. The automobile window of claim 2, wherein the light-emitting body is thicker than the inner glass sheet, the first section has a first sub-section, a second sub-section, and a third sub-section, the first sub-section and the second sub-section are connected at an angle, the second sub-section and the third sub-section are connected at an angle, the first sub-section is substantially parallel to the third sub-section and the third section, the second sub-section is substantially parallel to the second section, the first sub-section, the second sub-section, the third sub-section, and the second section form a recess, the recess, the outer glass sheet, the inner glass sheet cooperatively define an accommodating space, and the light-emitting body is accommodated in the accommodating space.

4. The automobile window of claim 2 or 3, wherein the first section defines a heat dissipation hole penetrating through the first section, and the heat dissipation hole corresponds to the light-emitting body in position.

5. The automobile window of claim 4, wherein the first section is provided with a swapping switch, the swapping switch comprises a door plate and an opening, the door plate is openable and closeable relative to the opening, and the swapping switch corresponds to the light-emitting body in position.

6. The automobile window of claim 5, wherein the heat dissipation hole is defined in the door plate of the swapping switch.

7. The automobile window of claim 1, further comprising a first connecting body between the outer glass sheet and the stiffener, wherein the outer glass sheet is adhered and fixed to the stiffener through the first connecting body.

8. The automobile window of claim 7, wherein the outer glass sheet defines a first adhesive groove in the first attaching region of the outer glass sheet, the intermediate adhesive layer defines a second adhesive groove in the second attaching region, the first adhesive groove and the second adhesive groove are in communication with each other and form a third adhesive groove, the third adhesive groove is filled with the first connecting body, and part of the first connecting body extends to the second attaching region to connect the stiffener.

9. The automobile window of claim 7, wherein the first connecting body is a cured colloid.

10. The automobile window of claim 1, wherein the stiffener is made of a metal material or a plastic material.

11. The automobile window of claim 2, wherein a receiving region is defined at one side of the second section away from the inner glass sheet and one side of the third section away from the outer glass sheet, and the receiving region is connected to the automobile housing.

12. An automobile, comprising an automobile housing and the automobile window of any one of claims 1 to 11, wherein the automobile housing defines a window, the automobile window is mounted on the window, and the stiffener is fixed and connected to the automobile housing.

13. The automobile of claim 12, wherein two opposite sides of the window are carrying edges, each of the carrying edges has a mounting region, the stiffener defines a receiving region at one side of the stiffener away from the inner glass sheet and away from the outer glass sheet, the carrying region and the receiving region are opposite to each other and cooperatively define a dispensing space, and a second connecting body is disposed in the dispensing space, the automobile window is fixed to the automobile housing through the second connecting body.
